# EUROPÄISCHE PATENTSCHRIFT

(11) **EP 2 396 558 B1**
(45) Veröffentlichungstag und Bekanntmachung des Hinweises auf die Patenterteilung: **01.04.2015**
(21) Anmeldenummer: 10704328.3
(22) Anmeldetag: 10.02.2010
(51) Int. Cl.: F16B 2/18

(54) **BEFESTIGUNGSVORRICHTUNG FÜR EIN MODULELEMENT IN EINEM FLUGZEUG**
FASTENING DEVICE FOR A MODULE ELEMENT IN AN AIRPLANE
DISPOSITIF DE FIXATION D'UN ÉLÉMENT DE MODULE DANS UN AÉRONEF

(30) Priorität: 10.02.2009 DE 102009008188; 10.02.2009 US 151359 P
(43) Veröffentlichungstag der Anmeldung: 21.12.2011
(73) Patentinhaber: Airbus Operations GmbH, 21129 Hamburg (DE)
(72) Erfinder: SCHMITZ, Guenter, 21266 Jesteburg (DE)
(74) Vertreter: Beyer, Andreas
(86) Internationale Anmeldenummer: PCT/EP2010/000821
(87) Internationale Veröffentlichungsnummer: WO 2010/091845

(56) Entgegenhaltungen:
- DE-A1- 19 601 919
- FR-A- 1 384 385

## Beschreibung

Die vorliegende Erfindung betrifft eine Befestigungsvorrichtung für den modularen Innenbau in Transportmitteln, insbesondere eine Befestigungsvorrichtung für ein Modulelement in einem Flugzeug, sowie ein diese Befestigungsvorrichtung beinhaltendes Befestigungssystem.

Der Innenbau eines Flugzeugs unterliegt besonderen Anforderungen. Erwünscht ist häufig ein modularer Aufbau, um durch eine Montage von Baugruppen die Endmontage zu beschleunigen und eine spätere Wartung zu vereinfachen. Zur präzisen Einpassung müssen, etwa bei der Endmontage, Toleranzen ausgeglichen werden können. Eine unerwünschte Montagepositionierung kann beispielsweise auftreten, wenn ein Modul in eine Vertiefung eingepasst werden soll, eine Sichtfläche des Moduls jedoch nicht mit angrenzenden Rändern der Vertiefung bündig abschließt.

Ferner können die Module schwere Versorgungseinheiten beinhalten, wie sie beispielsweise zur Klimatisierung oder Wasserver- und -entsorgung auf Langstreckenflügen eingesetzt werden. Selbst in Extremsituation wie einer Bruchlandung des Flugzeugs, muss die Befestigungsvorrichtung die Trägheitskräfte des schweren Moduls an die Flugzeugstruktur übertragen können. Ein Brechen der Befestigungsvorrichtung, beispielsweise bei einer harten Landung, würde aufgrund der Nähe zu Passagieren oder das Modul bedienendem Personal eine erhebliche Verletzungsgefährdung bedeuten. Aus diesem Grund werden Befestigungsvorrichtungen für Module beispielsweise zur Übertragung von Kräften von bis zu 10.000 N ausgelegt.

Auch in einer gewöhnlichen Flugsituation unterliegt die ein Modul tragende Flugzeugstruktur Vibrationen durch rotierende Triebwerke und kleinere Luftturbulenzen. Ein Übertragen dieser Vibrationen auf das Modul kann dessen Standzeit verringern, dadurch den Wartungsaufwand erhöhen oder sogar die Flugsicherheit gefährden.

Die Module können elektrische Geräte enthalten, für deren Betriebssicherheit ein Potentialausgleich bezüglich der (elektrischen) Masse des Flugzeugs vorteilhaft ist. Auch können Module, die nicht für einen elektrischen Betrieb vorgesehen sind, einen Potentialausgleich erfordern. Beispielsweise kann durch die vorgenannten Vibrationen an Materialgrenzen eine elektrostatische Aufladung aufgebaut werden, die ein Entzündungsrisiko erhöht, die Funktionsfähigkeit anderer Geräte stört oder einen Bedienkomfort des Moduls beeinträchtigt.

Ein weiterer Gesichtspunkt ist eine einfache, narrensichere Bedienbarkeit einer Befestigungsvorrichtung für ein Modul in einem Flugzeug. Beispielsweise kann die Notwendigkeit eines Austauschs des Moduls außerhalb regulärer Wartungsintervalle entstehen. In einem solchen Fall wäre eine möglichst werkzeuglose und schnelle Bedienung der Befestigungsvorrichtung etwa durch das Kabinenpersonal von Vorteil.

Die nachveröffentlichte Druckschrift DE 10 2008 015 648 A1 beschreibt einen Vakuumsauger zur temporären Fixierung an einer im Wesentlichen glatten, luftundurchlässigen Befestigungsfläche. Der Vakuumsauger kann zum Anheben von Gegenständen benutzt werden, wobei zur Aufrechterhaltung der Betriebssicherheit ein Unterschreiten eines Mindestunterdrucks zwischen einem Saugteller des Vakuumsaugers und der Befestigungsfläche durch eine Vakuumanzeigeeinrichtung erfassbar ist. Ein Unterdruck wird durch bereichsweise Lageveränderung des Saugtellers mittels eines Knie- oder Kipphebels aufgebaut.

Die Druckschrift DE 200 04 718 U1 offenbart einen Einsteck-Bolzen, der zum Verbinden zweier Bauteile in zur Deckung gebrachte Durchgangsöffnungen der beiden Bauteile eingesetzt wird. Über einen nach außen herausgeführten Kipp- oder Kniehebel können radial verschiebbar gelagerte Verhakungsmittel in eine radial ausgefahrene Position bewegt werden.

Eine gattungsgemäße Befestigungsvorrichtung gemäß dem Oberbegriff der Ansprüche 1 und 3 ist aus der Druckschrift DE 196 01 919 A1 bekannt. Die Druckschrift DE 196 01 919 A1 beschreibt eine Vorrichtung zur lösbaren Befestigung eines Bauteils an einer eine Durchgangsöffnung aufweisenden Wandung. Die Befestigungsvorrichtung umfasst einen Drehzapfen mit einer Verriegelungsnase an einem ersten Ende und einem Spannhebel an einem zweiten Ende. Der Spannhebel wirkt auf von einem Abstützelement umschlossene Federscheiben, um die Verriegelungsnase an eine Rückseite des Bauteils anzudrücken.

Die Druckschrift FR 1 384 385 A beschreibt einen Befestigungsmechanismus zum Verbinden zweier Platten. Eine der beiden Platten weist zwei kreisförmige Durchgangsausnehmungen unterschiedlichen Durchmessers auf, die durch einen bezüglich beider Ausnehmungen radial verlaufenden Schlitz verbunden sind.

Herkömmliche Befestigungssysteme erfüllen die vorgenannten Anforderungen in einem Flugzeug nur beschränkt. Beispielsweise übertragen bestehende Befestigungssysteme Kräfte nur in einzelne Richtungen, weshalb eine Vielzahl unterschiedlich orientierter Anbindungen je Modul notwendig ist. Komplexere Befestigungssysteme vermögen zwar die Übertragung von Vibrationen zu reduzieren, erlauben jedoch durch ihre Komplexität keine Montage oder Demontage ohne spezielles Werkzeug.

Zudem sehen bekannte Befestigungssysteme einen Potentialausgleich für einzelne Komponenten vor, der zusätzlich zum Befestigungssystem mit der Masse des Flugzeugs verbunden werden muss und somit einen zusätzlichen Montageschritt erfordert.

Es ist Aufgabe der vorliegenden Erfindung, hier Abhilfe zu schaffen.

Diese Aufgabe wird erfindungsgemäß durch eine Befestigungsvorrichtung zur Anbringung eines Modulelements an einer Haltestruktur in einem Flugzeug mit den Merkmalen des Patentanspruchs 1 gelöst. Demnach wird ein Bolzen bereitgestellt, der an einem ersten Ende einen verbreiterten Kopf zum Eingriff in eine Halteausnehmung der Haltestruktur und einen sich an den Kopf anschließenden Abschnitt mit einer ersten Querabmessung und einer zumindest im Wesentlichen rechtwinklig zur ersten Querabmessung angeordneten zweiten Querabmessung aufweist, die größer als die erste Querabmessung ist. Der Bolzen ist an einem entgegengesetzten zweiten Ende mit einem zur Drehung mit dem Bolzen verbundenen, in eine Offenstellung und eine Schließstellung bewegbaren Hebel versehen. Auf dem Bolzen ist eine längsbeweglich angebrachte Buchse vorhanden, die zum Halten einer Außenwand des Modulelements ausgebildet ist und eine elektrisch leitende Blattfeder zum in Kontakt kommen mit einerseits der Außenseite der Außenwand und andererseits der Haltestruktur trägt. Ein von dem Hebel betätigbarer Exzenter bewegt bei einer Bewegung des Hebels in seine Schließstellung die Buchse längs des Bolzens auf den Kopf zu.

Der verbreiterte Kopf am Bolzen kann in die Halteausnehmung der Haltestruktur eingreifen. Mittels des zur Drehung mit dem Bolzen verbundenen Hebels kann der Bolzen dann in eine erste Drehstellung gebracht werden, in welcher der die kleinere erste Querabmessung und die zweite Querabmessung aufweisende Abschnitt des Bolzens so angeordnet ist, dass er durch einen verengten Führungs- bzw. Verbindungsabschnitt in der Halteausnehmung der Haltestruktur ohne wesentlichen Widerstand bewegt werden kann. In einem auf den Führungsabschnitt folgenden, auf die zweite Querabmessung vergrößerten zweiten Bereich der Halteausnehmung kann der Bolzen durch eine weitere Drehung des Hebels in eine zweite Drehstellung (Verriegelungsstellung) gebracht werden, in der der Abschnitt des Bolzens dann radial formschlüssig arretiert ist. Vorzugsweise steht in der Verriegelungsstellung die zweite Querabmessung im Wesentlichen rechtwinklig zum Führungsabschnitt. Zugleich ist durch den verbreiterten Kopf am Bolzen ein axialer Formschluss erreicht, der eine Bewegung des Bolzens in Richtung des zweiten Endes verhindert, d.h. der Bolzen ist in der Halteausnehmung der Haltestruktur zugfest verankert.

In der Schließstellung des Hebels kann eine federnde Lagerung der auf dem Bolzen längsbeweglich angebrachten Buchse axiale Toleranzen ausgleichen oder Vibrationen von Seiten der Haltestruktur vor einer Übertragung auf die Außenwand des Modulelements dämpfen. Zugleich kann durch den elektrischen Kontakt zwischen der Haltestruktur und der Blattfeder in der Schließstellung, aufgrund der elektrischen Leitfähigkeit der Blattfeder und durch den elektrischen Kontakt zwischen der Blattfeder und der Außenwand, ein Potentialausgleich des Modulelements bezüglich der Masse des Flugzeugs erreicht werden.

Zur weiteren Verbesserung des Potentialausgleichs kann auch die Buchse elektrisch leitend sein, um den elektrischen Kontakt zwischen der von der Buchse getragenen Blattfeder und der ebenfalls von der Buchse gehaltenen Außenwand zu verbessern und einen Potentialausgleich durch einen bei der Bewegung der Buchse längs des Bolzens in Richtung des Kopfs hergestellten Kontakt zwischen der Buchse und der Haltestruktur zu ermöglichen. Dazu können ein oder mehrere Vorsprünge an der Buchse angebracht sein, um an einem oder mehreren Auflagepunkten die Haltestruktur zu kontaktieren.

Die Blattfeder kann so geformt sein, dass in der Schließstellung ein flächiger Kontakt zur Haltestruktur entsteht. Zum flächigen Kontakt kann zumindest ein zur Haltestruktur paralleles Ende der Blattfeder ausgebildet sein. Alternativ kann die Blattfeder zumindest einen Auflagepunkt zum Kontaktieren der Haltestruktur aufweisen. Der Auflagepunkt kann durch eine lokale, beispielsweise semisphärische Verformung der Blattfeder realisiert sein, um zur Verbesserung des elektrischen Kontakts lokal die Flächenpressung zu erhöhen. Ferner kann der Auflagepunkt, bei Vibrationen seitens der Haltestruktur, die Kontaktstelle freireiben und so eine mögliche Verschlechterung des elektrischen Kontakts, etwa infolge oberflächlicher Oxidation, verhindern.

Die Aufgabe wird alternativ durch eine Befestigungsvorrichtung zur Anbringung eines Modulelements an einer Haltestruktur in einem Flugzeug mit den Merkmalen des Anspruchs 4 gelöst. Demnach wird ein Bolzen bereitgestellt, der an einem ersten Ende einen verbreiterten Kopf zum Eingriff in eine Halteausnehmung der Haltestruktur und einen sich an den Kopf anschließenden Abschnitt mit einer ersten Querabmessung und einer zumindest im Wesentlichen rechtwinklig zur ersten Querabmessung angeordneten zweiten Querabmessung aufweist, die größer als die erste Querabmessung ist. Der Bolzen ist an einem entgegengesetzten zweiten Ende mit einem zur Drehung mit dem Bolzen verbundenen, in eine Offenstellung und eine Schließstellung bewegbaren Hebel versehen. Auf dem Bolzen ist eine längsbeweglich angebrachte und elektrisch leitende Buchse vorhanden, die zum Halten einer Außenwand des Modulelements und zum in Kontakt kommen mit der Haltestruktur ausgebildet ist. Ein von dem Hebel betätigbarer Exzenter bewegt bei einer Bewegung des Hebels in seine Schließstellung die Buchse längs des Bolzens auf den Kopf zu.

Eine Betätigung der Befestigungsvorrichtung über den Hebel erfolgt wie zuvor beschrieben. Wiederum entsteht durch den Eingriff des verbreiterten Kopfs des Bolzens ein axialer Formschluss in der Halteausnehmung der Haltestruktur, der eine Bewegung des Bolzens in Richtung des zweiten Endes verhindert. Zudem ist in der Verriegelungsstellung durch die größere zweite Querabmessung des Abschnitts des Bolzens ein radialer Formschluss erreicht. Zugleich kann durch den elektrischen Kontakt zwischen der Haltestruktur und der Buchse in der Schließstellung des Hebels und durch die elektrische Leitfähigkeit der die Außenwand haltenden Buchse ein Potentialausgleich des Modulelements bezüglich der Masse des Flugzeugs stattfinden. Durch den Verzicht auf eine Blattfeder kann die Befestigungsvorrichtung günstiger hergestellt werden und es sind weniger Einzelteile zu montieren.

Beide Ausführungsformen können durch die folgenden Merkmale vorteilhaft weitergebildet werden.

Die Buchse kann dazu ausgebildet sein, die Bewegung des Hebels in seine Schließstellung zu blockieren, wenn der Bolzen in seiner ersten Drehstellung steht. Durch das Blockieren der Bewegung des Hebels kann eine Fehlbedienung der Befestigungsvorrichtung oder eine unzureichende Befestigung des Modulelements an der Haltestruktur verhindert werden, indem ein Benutzer auf eine Drehstellung des Bolzens aufmerksam gemacht wird, in der eine radiale Verriegelung des Bolzens nicht möglich ist.

Der Exzenter kann mit dem Hebel einstückig ausgebildet sein, was die Herstellungskosten der Befestigungsvorrichtung verringert und die Stabilität erhöht.

Zur Sicherung der Befestigungsvorrichtung in ihrem geschlossenen Zustand kann die Buchse auf ihrem Außenumfang eine Sicherungsabflachung aufweisen zum Zusammenwirken mit einem Sicherungsvorsprung des Hebels, um den Hebel in seiner Schließstellung drehfest mit der Buchse zu koppeln. Auf diese Weise ist der Hebel gegen ein Verdrehen gesichert. Die Sicherungsabflachung an der Buchse kann an einer der Verriegelungsstellung des Hebels entsprechenden Position angeordnet sein. Dadurch ist, weil der Hebel zur Drehung des Bolzens mit diesem verbunden ist, auch eine Drehsicherung des Bolzens bezüglich der Buchse erzielt.

Die Buchse kann ferner zur formschlüssigen Aufnahme der Außenwand und/oder der Blattfeder ausgebildet sein. Insbesondere kann zur drehfesten Aufnahme an der Buchse ein von einem Rundprofil abweichendes Segment ausgebildet sein. Das Segment kann beispielsweise als eine Nut (insbesondere als eine T-Nut) oder als eine Abflachung auf dem Außenumfang der Buchse ausgebildet sein. In einer konstruktiv vorteilhaften Ausgestaltung weist die Außenwand des Modulelements und/oder die Blattfeder eine die Buchse drehfest aufnehmende Durchgangsausnehmung auf. Beispielsweise kann die Durchgangsausnehmung, in die die Buchse drehfest eingreift, im Wesentlichen komplementär zum Umfang der Buchse geformt sein. Zusätzlich kann die Buchse eine Auskragung aufweisen, beispielsweise einen Flansch, so dass die Außenwand und/oder die Blattfeder zwischen einer Klemmscheibe und der Auskragung verspannt werden können. Auch können die Außenwand oder die Blattfeder getrennt verspannt sein, beispielsweise zwischen zwei Klemmscheiben.

Gemäß einer bevorzugten Ausgestaltung stellt die zum Zusammenwirken mit dem Sicherungsvorsprung des Hebels vorgesehene Sicherungsabflachung zugleich den Formschluss zwischen der Buchse und der Außenwand des Modulelements und/oder der Blattfeder her. Dies erlaubt eine besonders einfache Herstellung der Befestigungsvorrichtung und führt zu einer Drehsicherung des Bolzens auch bezüglich der Außenwand des Modulelements, wenn der Hebel seine Schließstellung einnimmt.

Um den Hebel auch in seiner Offenstellung arretieren zu können, ist gemäß einer Weiterbildung an einem dem Exzenter bzw. dem Hebel zugewandten, stirnseitigen Ende der Buchse wenigstens eine radiale Nut ausgebildet, in die in der Offenstellung des Exzenters bzw. des mit diesem verbundenen Hebels ein entsprechender, vom Exzenter hervorstehender Vorsprung eingreift. Zugleich ist auf diese Weise eine Drehsicherung des Bolzens bezüglich der Buchse auch in der Offenstellung des Hebels erreicht. Gemäß einer vorteilhaften Weiterbildung dieser Ausführungsform ist am stirnseitigen Ende der Buchse eine zweite radiale Nut vorhanden, die so angeordnet ist, dass die beiden radialen Nuten zwischen sich einen Winkel von 90 Grad einschließen. Eine Montage der erfindungsgemäßen Befestigungsvorrichtung ist dadurch vereinfacht, denn mittels der zwei wie beschrieben angeordneten radialen Nuten lassen sich auch in der Offenstellung des Hebels die Entriegelungsstellung und die Verriegelungsstellung des Bolzens definiert und von einem Benutzer erspürbar festlegen. Öffnet beispielsweise ein Benutzer den sich in der Schließstellung befindlichen Hebel, um die Befestigungsvorrichtung zu lösen und ein damit befestigtes Modulelement zu entnehmen, so braucht er anschließend den Hebel aus der ersten Rastnut lediglich um 90 Grad in die zweite Rastnut zu drehen und weiß dann, dass der Bolzen, genauer der die zwei unterschiedlichen Querabmessungen aufweisende Abschnitt des Bolzens, seine Entriegelungsstellung einnimmt, in der der Bolzen aus der Halteausnehmung entfernt werden kann.

Der Eingriff des Bolzens durch den verbreiterten Kopf in die Halteausnehmung der Haltestruktur kann durch eine sich zum ersten Ende hin verjüngende Form des Kopfs erleichtert werden. Ein als Kegel oder Kegelstumpf ausgebildeter Kopf kann bei der Montage vorteilhaft als Führungshilfe dienen.

Um das Einsetzen der Befestigungsvorrichtung in die Ausnehmung der Haltestruktur zu erleichtern, kann eine zwischen der Buchse und dem Kopf des Bolzens wirkende Druckfeder den Bolzen in eine Montage-/Demontagestellung vorspannen. Unter Wirkung der Druckfeder kann die Buchse in Anlage mit dem Exzenter laufen. Dadurch kann die Montage- und Demontagestellung der Schließ- bzw. Offenstellung des Hebels entsprechen. Die Kraft der Druckfeder kann über den Exzenter auch auf den den Exzenter betätigenden Hebel rückwirken. Durch diese Rückwirkung kann die Bewegung des Hebels einen definierten Totpunkt aufweisen, bei dessen Überschreiten der Hebel selbsttätig in die Schließstellung springt. Damit kann der Hebel zusätzlich gegen ein versehentliches oder durch Vibrationen verursachtes Öffnen gesichert werden. Zudem kann ein solcher Schnappmechanismus einem Benutzer eine deutliche Rückmeldung hinsichtlich des Erreichens der Schließstellung vermitteln. Durch die Druckfeder können ferner Toleranzen in axialer Richtung ausgeglichen werden.

Vorteilhaft stützt sich die Druckfeder am Abschnitt des Bolzens ab. Durch eine geeignete axiale Dimensionierung des Abschnitts kann so verhindert werden, dass die Druckfeder an der Haltestruktur aufliegt und nachteilige Reibungskräfte bei der Montage verursacht. Ferner kann die Druckfeder elektrisch leitend sein, wodurch ein weiterer Leitungsweg von der Außenwand über die Buchse und den Bolzen zur Haltestruktur am Flugzeug realisiert werden kann.

Zur weiteren Verbesserung der elektrischen Leitfähigkeit kann die Buchse eine elektrisch leitende Beschichtung aufweisen. Über diese Beschichtung kann der elektrische Kontakt zwischen der Außenwand und der Buchse, der Blattfeder und der Buchse oder der Haltstruktur und der Buchse verbessert werden.

Die eingangs genannte Aufgabe wird ferner durch ein Befestigungssystem gelöst, dass wenigstens eine wie zuvor beschrieben ausgestaltete Befestigungsvorrichtung und eine Haltestruktur umfasst. Die Haltestruktur hat wenigstens eine Halteausnehmung mit einem ersten Bereich, einem zweiten Bereich und einem den ersten Bereich mit dem zweiten Bereich verbindenden Führungsabschnitt. Der erste Bereich gestattet einen Durchtritt des Kopfs am Bolzen einer Befestigungsvorrichtung. Der zweite Bereich weist einen der zweiten Querabmessung des Abschnitts am Bolzen der Befestigungsvorrichtung entsprechenden Durchmesser auf. Eine Querabmessung des Führungsabschnitts kann bis auf übliche Toleranzen der ersten Querabmessung des Abschnitts am Bolzen der Befestigungsvorrichtung entsprechen.

Der Führungsabschnitt ermöglicht in der ersten Drehstellung des Bolzens eine Verlagerung des Bolzens aus dem ersten Bereich in den zweiten Bereich der Halteausnehmung. Die der ersten Querabmessung entsprechende Querabmessung des Führungsabschnitts kann im Wesentlichen gleich der ersten Querabmessung des Bolzens sein oder zwischen der ersten und zweiten Querabmessung liegen. Beispielsweise kann die Querabmessung des Führungsabschnitts 5% größer als die erste Querabmessung des Bolzens sein. Die zweite Querabmessung kann beispielsweise doppelt so groß wie die erste Querabmessung sein.

Vorteilhaft ist der erste Bereich der Halteausnehmung oberhalb des zweiten Bereichs angeordnet. So kann bei der Montage des Modulelements, nachdem der Kopf des Bolzens in den oberen ersten Bereich der Halteausnehmung eingesetzt worden ist, der Abschnitt am Bolzen unter Ausnutzung der Gravitationskraft in den zweiten Bereich gleiten.

Eine bevorzugte Ausführungsform der Erfindung wird nun anhand der beigefügten Zeichnungen näher erläutert. Es zeigen:
- Figur 1: eine auseinandergezogene räumliche Darstellung eines Ausführungsbeispiels einer erfindungsgemäßen Befestigungsvorrichtung;
- Figur 2: eine Seitenansicht des Ausführungsbeispiels aus Figur 1 in einem geöffneten Zustand;
- Figur 3: eine räumliche Darstellung des Ausführungsbeispiels im geöffneten Zustand;
- Figur 4: eine räumliche Darstellung des Ausführungsbeispiels in einem geschlossenen Zustand;
- Figur 5: eine Schnittansicht des Ausführungsbeispiels im geschlossenen Zustand;
- Figur 6: eine transparente räumliche Darstellung des Ausführungsbeispiels im geschlossenem Zustand; und
- Figur 7: eine räumliche Darstellung einer Weiterbildung des Ausführungsbeispiels.

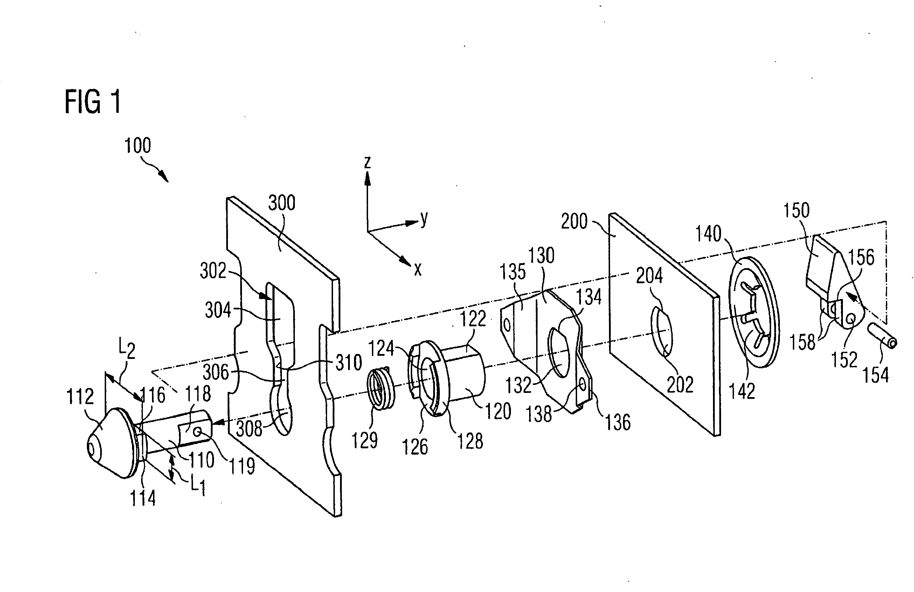

Figur 1 zeigt ein allgemein mit 100 bezeichnetes Ausführungsbeispiel einer Befestigungsvorrichtung zur Befestigung eines Modulelements an einer Flugzeugstruktur. Modulseitige Merkmale sind mit Bezugszeichen 2xx, flugzeugseitige Merkmale mit 3xx bezeichnet.

Die Befestigungsvorrichtung 100 umfasst einen Bolzen 110, der an seinem in Figur 1 links gezeigten Ende einen verbreiterten Kopf 112 und einen sich in axialer Richtung dahinter anschließenden Abschnitt 114 aufweist. Der Abschnitt 114 mit kreiszylindrischer Grundform hat zwei zueinander parallele Abflachungen 116, die zwischen sich eine erste Querabmessung L₁ festlegen. Rechtwinklig zur ersten Querabmessung L₁ hat der Abschnitt 114 eine zweite Querabmessung L₂, die größer als die erste Querabmessung L₁ ist und dem Durchmesser der kreiszylindrischen Grundform des Abschnitts 114 entspricht. Die beiden Kreissegmente des Abschnitts 114 liegen somit auf einem gedachten Zylindermantel koaxial zum Bolzen 110. Im gezeigten Ausführungsbeispiel der Befestigungsvorrichtung 100 entspricht der Durchmesser des Bolzens 110 nach dem Abschnitt 114 der ersten Querabmessung L₁. Am in Figur 1 rechts gezeigten entgegengesetzten Ende des Bolzens 110 sind zwei zueinander parallele Abflachungen 118 und eine radiale Durchbohrung 119 ausgebildet.

Weiter umfasst die Befestigungsvorrichtung 100 eine Buchse 120, deren zylinderförmiger Umfang von einer Sicherungsabflachung 122 unterbrochen ist. Die Buchse 120 hat eine axiale Durchgangsausnehmung 124 zur gleitbeweglichen Aufnahme des Bolzens 110. Das dem Abschnitt 114 des Bolzens 110 zugewandte Ende der Buchse 120 weist einen radial nach außen ragenden Flansch 126 mit zwei axial von ihm in Richtung des Kopfs 112 hervorstehenden, kreissegmentförmigen Vorsprüngen 128 auf.

In einem Bereich radial innerhalb der Vorsprünge findet eine Schraubenfeder 129 Platz, die als Druckfeder ausgebildet ist und sich an einer in Figur 1 nicht gezeigten Stufe in der Durchgangsausnehmung 124 abstützt. Ist der Bolzen 110 in die Durchgangsausnehmung 124 der Buchse 120 eingesetzt, stützt sich das andere Ende der Schraubenfeder 129 am Abschnitt 114 des Bolzens 110 ab.

Die Befestigungsvorrichtung umfasst ferner eine Blattfeder 130 aus einem elastischen und elektrisch leitenden Material, vorzugsweise Edelstahl. Die Blattfeder 130 besitzt eine Durchgangsausnehmung 132 zur drehfesten Aufnahme der Buchse 120 mit einer Abflachung 134 an einer der Sicherungsabflachung 122 entsprechenden Stelle. Auf diese Weise korrespondiert die Form der Durchgangsausnehmung 132 mit dem Profil der Buchse 120, so dass die Blattfeder 130 im auf die Buchse 120 aufgesetzten Zustand bezüglich einer Drehung formschlüssig mit letzterer verbunden ist. Alternativ zu der einzelnen Sicherungsabflachung 122 mit der korrespondierenden einzelnen Abflachung 134 können an Buchse 120 und Blattfeder 130 jeweils mehrere Abflachungen ausgebildet sein. Beispielsweise kann das Profil der Buchse 120 und der Durchgangsausnehmung 132 ein Polygonprofil sein. Auch kann ein drehfester Sitz der Blattfeder 130 auf der Buchse 120 durch eine Verzahnung herbeigeführt werden. Allgemein kann durch ein von einem Rundprofil abweichendes Verankerungssegment eine drehfeste Verankerung erreicht werden.

Die Blattfeder 130 hat einen näherungsweise tellerförmigen Querschnitt mit zwei Armen 135, deren Enden 136 im Wesentlichen parallele Flächen ausbilden, auf denen jeweils ein hier kalottenförmiger Kontaktvorsprung als Auflagepunkt 138 vorgesehen ist.

Eine Klemmscheibe 140 besitzt Lamellen 142 mit Schneidkanten auf einem Kreisumfang, der etwas kleiner als die erste Querabmessung L₁ des Bolzens 110 ist. Die Klemmscheibe 140 kann so irreversibel auf den Bolzen 110 aufgeschoben werden, um sich dort durch ein Einschneiden der Lamellen 142 in die Oberfläche des Bolzens 110 gegen ein Abziehen der Klemmscheibe 140 zu verspannen.

Ein Hebel 150 besitzt eine Durchbohrung 152, die durch die Abflachungen 118 mit der Durchbohrung 119 im Bolzen 110 zur Deckung gebracht werden können. Mittels eines Stiftes 154 ist der Hebel 150 am Bolzen 110 schwenkbeweglich befestigbar. Durch den Hebel 150 kann ein Drehmoment zur Drehung des Bolzens 110 um seine Mittellängsachse übertragen werden. Ferner weist der Hebel 150 einen Sicherungsvorsprung 156 auf, dessen Höhe mit der Höhe der Sicherungsabflachung 122 an der Buchse 120 übereinstimmt. Auch weist der Hebel 150 zwei als Exzenter 158 bezüglich der Schwenkachse um den Stift 154 ausgebildete Vorsprünge aus.

Eine Außenwand 200 eines Modulelements ist als Trägerplatte des Modulelements in Figur 1 gezeigt. In einem abgewandelten Ausführungsbeispiel kann auch ein Modulelement mit einer gekrümmten Außenwand (nicht gezeigt) an die Flugzeugstruktur angebracht werden. In beiden Ausführungsbeispielen ist zum Anbringen mittels der Befestigungsvorrichtung 100 modulseitig eine Durchgangsausnehmung 202 in der Außenwand 200 vorhanden. Ähnlich der Durchgangsausnehmung 132 an der Blattfeder 130 weist auch die Durchgangsausnehmung 202 der Außenwand 200 eine Abflachung 204 auf. Dadurch kann die Außenwand 200 zusammen mit der Blattfeder 130 drehfest auf die Buchse 120 aufgesetzt werden. Der Flansch 126 an der Buchse 120 und die Klemmscheibe 140 dienen im zusammengebauten Zustand der Verspannung der dazwischen liegenden Blattfeder 130 und der Außenwand 200, wie nachstehend näher erläutert wird.

Flugzeugseitig ist eine Haltestruktur 300 mit einer Halteausnehmung 302 vorgesehen. Die Halteausnehmung 302 ist in einen ersten Bereich 304, einen Führungsabschnitt 306 und einen kreisförmigen zweiten Bereich 308 unterteilt. Der näherungsweise rechteckige erste Bereich 304 ist in seiner Länge und Breite ausreichend bemessen, um einen Durchtritt des verbreiterten Kopfs 112 des Bolzens 110 zu ermöglichen. Der Führungsabschnitt 306 besitzt zwei parallele Führungsflächen 310, die voneinander einen Abstand im Wesentlichen gleich der ersten Querabmessung L₁ einschließlich eines leichten Spiels zur beweglichen Aufnahme des Abschnitts 114 haben.

Ein in den ersten Bereich 304 eingeführter Abschnitt 114 des Bolzens 110 kann gegenüber der in Figur 1 gezeigten Drehstellung um 90 Grad in eine erste Drehstellung (Entriegelungsstellung) gedreht werden. Die Abflachungen 116 können dann entlang der parallelen Führungsflächen 310 nach unten gleiten. Der Abschnitt 114 des Bolzens 110 wird dadurch in den kreisförmigen zweiten Bereich 308 der Halteausnehmung 302 der Haltestruktur 300 bewegt. Dort kann der Bolzen 110 mittels des Hebels 150 durch eine weitere Drehung um 90 Grad in eine zweite Drehstellung (Verriegelungsstellung) gebracht werden. Somit ist ein Formschluss des Bolzens 110 in der Halteausnehmung 302 bezüglich der Ebene der Haltestruktur 300 erreicht. Zugleich kann der Bolzen 110 aufgrund des verbreiterten Kopfs 112 nicht in axialer Richtung durch den kreisförmigen zweiten Bereich 308 aus der Halteausnehmung 302 der Haltestruktur 300 entweichen.

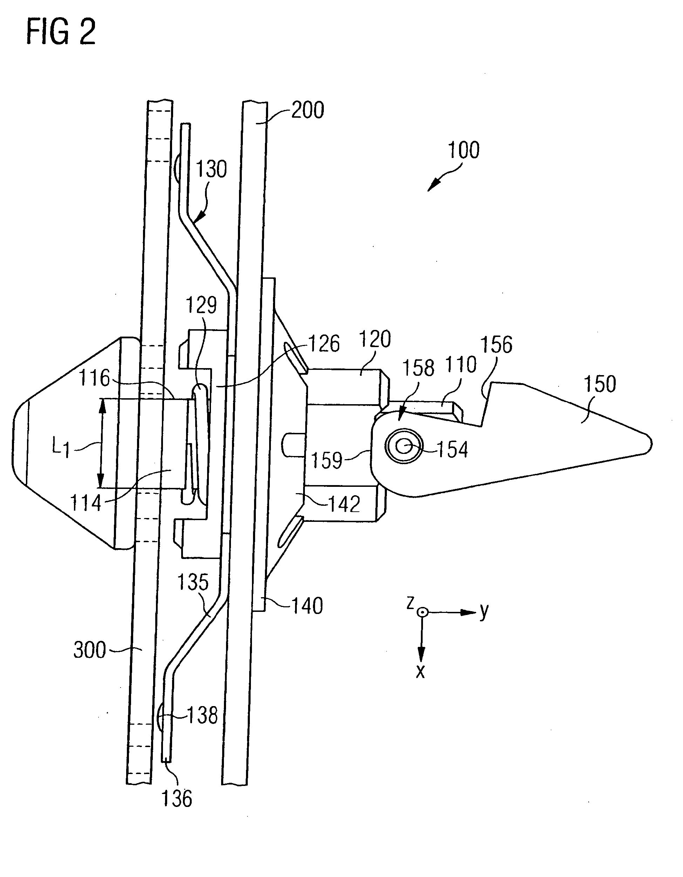

In Figur 2 ist das Ausführungsbeispiel der Befestigungsvorrichtung 100 in der Entriegelungsstellung gezeigt. Die Seitenansicht der Figur 2 zeigt eine Ansicht entgegen der in Figur 1 gezeigten Z-Achse. Der Bolzen 110 befindet sich in der ersten Drehstellung, so dass die Abflachungen 116 des Abschnitts 114 in der Seitenansicht der Figur 2 im Abstand der ersten Querabmessung L₁ zu sehen sind. Der Bolzen 110 kann in dieser ersten Drehstellung in die Haltestruktur 300 eingesetzt werden.

Der Hebel 150 nimmt während des Einsetzens des Bolzens 110 in die Haltestruktur 300 seine in Figur 2 gezeigte Offenstellung ein. Unter der Wirkung der Schraubenfeder 129 liegt die Buchse 120 mit ihrer ringförmigen Stirnfläche an einer ersten Exzenterabflachung 159 des Exzenters 158 an. Zugleich nimmt die auf dem Bolzen 110 gleitbeweglich angeordnete Buchse 120 in der Offenstellung eine von der Haltestruktur 300 entfernte Position ein. Die mit der Buchse 120 verbundene Blattfeder 130 ist dadurch von der Haltestruktur 300 abgehoben und die Auflagepunkte 138 an den beiden Flächen 136 berühren die Haltestruktur 300 nicht oder mit nur geringem Andruck. So ist in der Offenstellung des Hebels 150 ein reibungsarmes Gleiten der Abflachungen 116 längs der Führungsflächen 310 im Führungsabschnitt 306 der Haltestruktur 300 ermöglicht. Zugleich kann eine Ausrichtung der Außenwand 200 mit geringem Kraftaufwand korrigiert werden.

Die Blattfeder 130 liegt an dem Flansch 126 der Buchse 120 an, wobei die Außenwand 200 wiederum an der Blattfeder 130 anliegt. Dadurch wird ein elektrischer Kontakt zwischen der Außenwand 200 und der Blattfeder 130 erreicht. Ein nachhaltiger Bestand des elektrischen Kontakts ist durch die Verspannung von Blattfeder 130 und Außenwand 200 zwischen dem Flansch 126 und der Klemmscheibe 140 sichergestellt. In dem gezeigten Ausführungsbeispiel ist die Buchse 120 durch eine Nickelbeschichtung elektrisch leitend. Durch die ebenfalls elektrisch leitende Klemmscheibe 140 besteht ein weiterer Leitungsweg von der Außenwand 200 zur Buchse 120 über die Klemmscheibe 140 mit ihren sich in die Nickelbeschichtung der Buchse 120 einschneidenden Lamellen 142.

Eine Bewegung des Hebels 150 in seine Schließstellung ist in der in Figur 2 gezeigten Entriegelungsstellung des Hebels 150 ausgeschlossen, weil der Sicherungsvorsprung 156 am Hebel 150 tiefer als ein Außendurchmesser der Buchse 120 sitzt. Würde der Hebel 150 in der in Figur 2 gezeigten Entriegelungsstellung um den Stift 154 geschwenkt, würde der Sicherungsvorsprung 156 am dem Hebel 150 zugewandten Ende der Buchse 120 anschlagen und so ein Erreichen der Schließstellung verhindern.

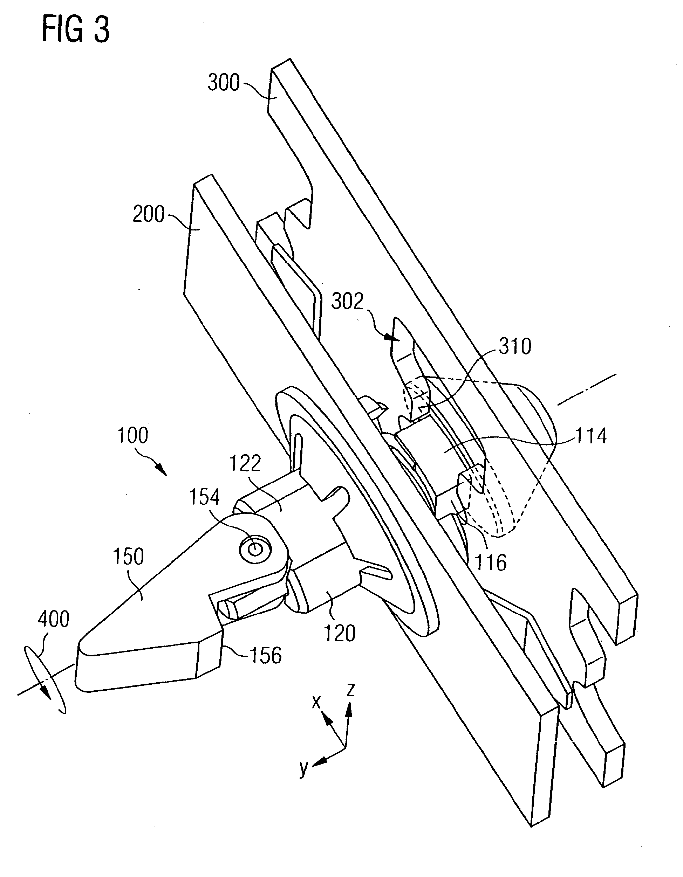

Figur 3 zeigt das Ausführungsbeispiel der Befestigungsvorrichtung im selben Zustand wie in Figur 2 aus einer anderen Perspektive. Die Entriegelungsstellung des Bolzens 110 ist an der zu den Führungsflächen 310 parallel stehenden Abflachungen 116 des Bolzenabschnitts 114 zu erkennen. Wie unter Bezug auf Figur 2 erläutert wird die Bewegung des Hebels 150 in die Schließstellung durch ein vorzeitiges Zusammenwir-ken des Sicherungsvorsprungs 156 am Hebel 150 mit dem dem Hebel zugewandten Ende der Buchse 120 verhindert. Durch eine am (geöffneten) Hebel 150 ansetzende Drehbewegung um 90 Grad in der mit einem Pfeil 400 gezeigten Richtung werden der die Schwenkachse des Hebels 150 bildende Stift 154 und der Bolzen 110 gedreht. In dieser Verriegelungsstellung bringt eine Schwenkbewegung 500 des Hebels 150 um den Stift 154 den Sicherungsvorsprung 156 mit der Sicherungsabflachung 122 an der Buchse 120 in Anlage. Diese Schließstellung wird nachfolgend näher erläutert.

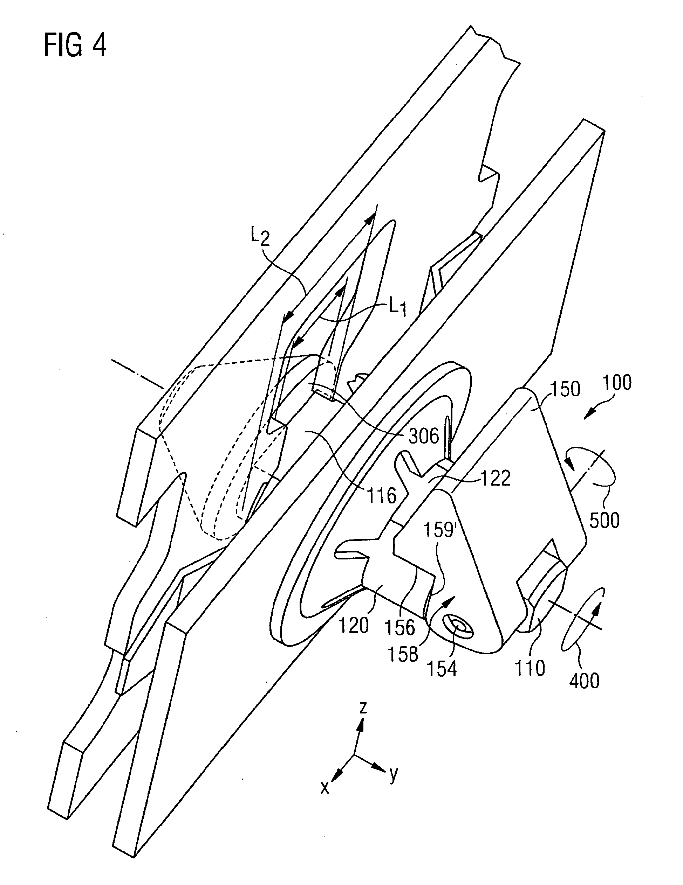

Figur 4 zeigt das Ausführungsbeispiel der Befestigungsvorrichtung 100 in der Verriegelungsstellung des Bolzens 110 und in der Schließstellung des Hebels 150, nachdem die entsprechende Drehung 400 und Schwenkbewegung 500 am Hebel 150 ausgeführt worden sind. Der Abschnitt 114 ist mit seiner größeren zweiten Querabmessung L₂ quer zum Führungsabschnitt 306 positioniert und der Sicherungsvorsprung 156 liegt auf der Sicherungsabflachung 122 an.

Unter Wirkung der in Figur 4 nicht sichtbaren Schraubenfeder 129 wird die Buchse 120 gegen eine zweite Exzenterabflachung 159' des Exzenters 158 gedrückt. Durch diesen Andruck wird die Schließstellung des Hebels 150 gesichert. Zugleich bewirkt der Andruck auf den Exzenter 158 einen Schnappeffekt des Hebels, der dem Hebel einen Totpunkt verleiht, jenseits dessen der Hebel selbsttätig in seine Offen- bzw. Schließstellung springt. Ferner ist durch das Aufliegen des Sicherungsvorsprungs 156 auf der Sicherungsabflachung 122 der Hebel 150 mit der Buchse 120 gegen ein Verdrehen gesichert. Aufgrund der drehfesten Verbindung zwischen Hebel 150 und Bolzen 110 durch den Stift 154 bewirkt das Zusammenspiel von Sicherungsabflachung 122 und Sicherungsvorsprung 156 auch eine Verdrehsicherung des Bolzens 110.

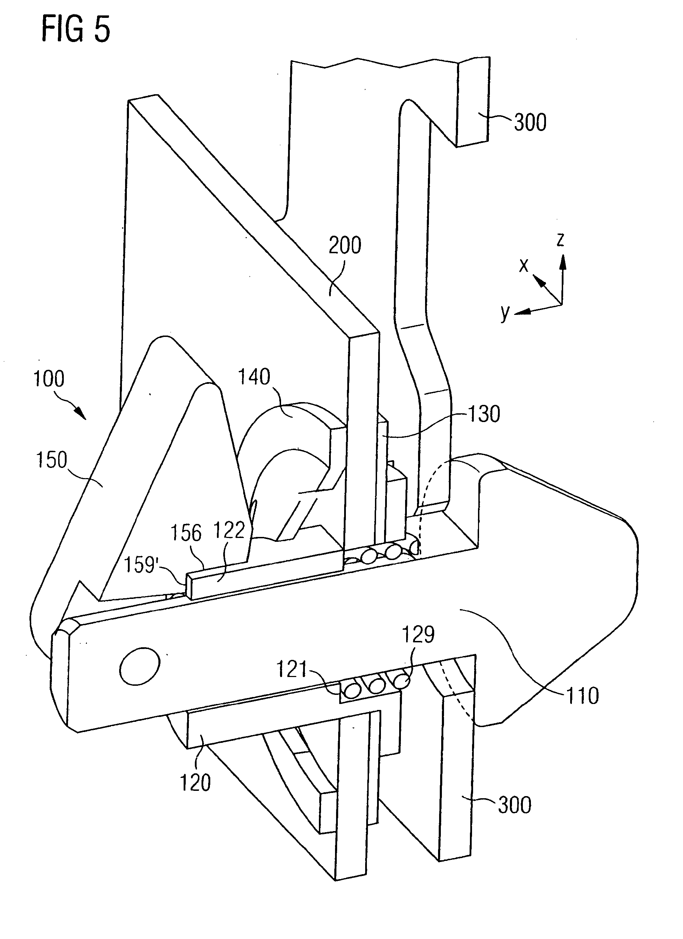

Figur 5 zeigt das Ausführungsbeispiel der Befestigungsvorrichtung 100 in demselben geschlossenen Zustand wie in Figur 4 in einer Schnittansicht entlang der Längsachse des Bolzens 110. In dieser Darstellung ist das Anliegen des Sicherungsvorsprungs 156 an der Sicherungsabflachung 122 deutlich gezeigt. Auch zeigt Figur 5, wie die Bewegung des Hebels 150 in die dargestellte Schließstellung die zweite Exzenterabflachung 159' mit dem dem Hebel zugewandten Ende der Buchse 120 in Anlage bringt, wobei die an der Stufe 121 anliegende Schraubenfeder 129 zusammengedrückt wird. Zugleich zieht der Hebel 150 den Bolzen 110 in Richtung des Hebels 150 aus der Buchse 120, wodurch die auf der Buchse 120 über die Klemmscheibe 140 verspannte Außenwand 200 und die Blattfeder 130 auf die Haltestruktur 300 zu bewegt werden.

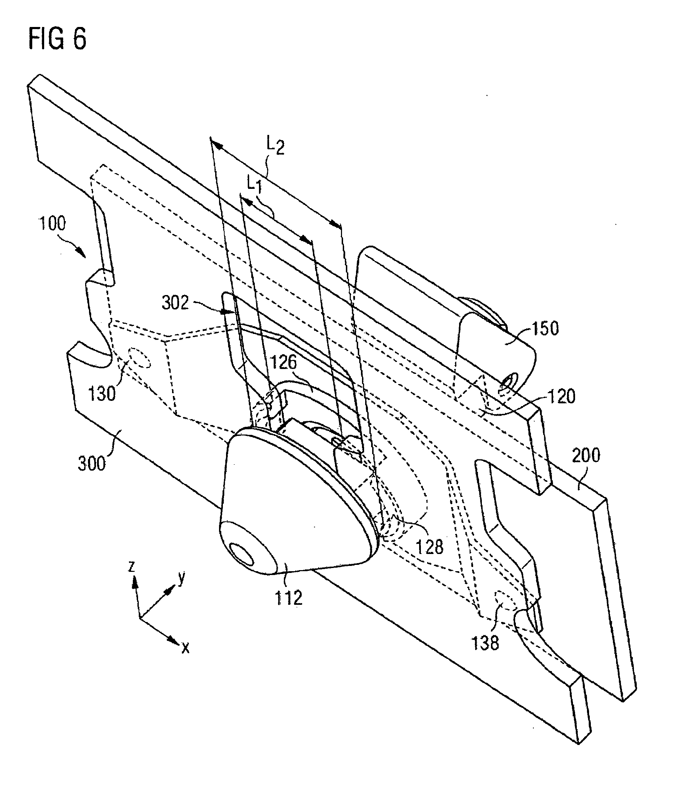

Figur 6 zeigt den bei dieser Bewegung zur Haltestruktur 300 entstehenden elektrischen und mechanischen Kontakt mit der Haltestruktur 300. Die Bewegung der Buchse 120 in Richtung auf die Haltestruktur 300 überwindet einen geringen in Figur 2 gezeigten Abstand zwischen Auflagepunkt 138 und Haltestruktur 300. Aus dem insgesamt von der Buchse 120 längs dem Bolzen 110 zurückgelegten Weg sowie aus einer Federkonstante der Blattfeder 130 ergibt sich eine definierte Andruckkraft zwischen Auflagepunkt 138 und Haltestruktur 300. Aus der daraus resultierenden Reibungskraft sowie aus dem Abstand der Auflagepunkte 138 von der Achse des Bolzens 110 ergibt sich ferner ein definiertes Drehmoment, das einem Verdrehen der Befestigungsvorrichtung 100 entgegensteht.

Im in Figur 6 gezeigten Ausführungsbeispiel der Befestigungsvorrichtung 100 ist eine Höhe der kreissegmentförmigen Vorsprünge 128 am Flansch 126 der Buchse 120 so bemessen, dass in der Schließstellung die Vorsprünge 128 an der Haltestruktur 300 anliegen. Durch diese Anlage wird aufgrund der Nickelbeschichtung der Buchse 120 ein weiterer Leitungsweg zwischen der Außenwand 200 und der Haltestruktur 300 geschaffen. Ferner kann über die Vorsprünge 128 ein Anpressdruck der Befestigungsvorrichtung 100 erhöht werden. Auch in der Ausführungsform mit anliegenden Vorsprüngen 128 ergänzt der Leitungsweg über die elektrisch leitenden Blattfeder 130 den Potentialausgleich der Außenwand 200 in vorteilhafter Weise, da die Blattfeder 130 durch Vibrationen seitens der Haltestruktur 300 an den Auflagepunkten 138 reibt. Dadurch wird ein Oxidieren oder eine Verschmutzung zwischen Auflagepunkt 138 und Haltestruktur 300 verhindert oder entfernt.

In einer alternativen Ausführungsform können mehrere, beispielsweise punktförmige, Vorsprünge die gezeigten kreissegmentförmigen Vorsprünge 128 ersetzen. Die Vorsprünge 128 können zudem elastisch sein, um einen Kompromiss zwischen axialer Dämpfung von Vibrationen und hohem Anpressdruck zu erzielen. Eine höhere axiale Dämpfung von Vibrationen seitens der Haltestruktur 300 kann in einer Ausführungsform ohne an der Haltestruktur 300 anliegende Vorsprünge 128 erreicht werden, indem nur die Blattfeder 130 als weiche Dämpfung eingesetzt ist.

Ergänzend kann ein weiterer axialer Vorsprung am Flansch 126 zum Eingriff in vorzugsweise den ersten Bereich 304 der Halteausnehmung 302 der Haltestruktur 300 vorgesehen sein (nicht dargestellt). Dieser eingreifende Vorsprung weist eine Höhe auf, die so bemessen ist, dass er in der Offenstellung des Hebels das Einsetzen des Kopfs 112 in die Halteausnehmung 302 nicht stört und in der Schließstellung des Hebels in die Halteausnehmung 302 eingreift, um durch Formschluss ein Verdrehen der Befestigungsvorrichtung 100 gegenüber der Haltestruktur 300 zu verhindern.

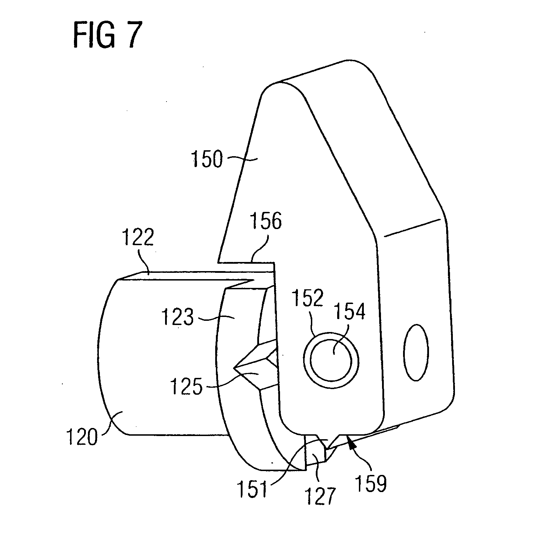

Figur 7 zeigt ein hinsichtlich des Zusammenwirkens von Hebel 150 und Buchse 120 weitergebildetes Ausführungsbeispiel der Befestigungsvorrichtung 100. Zur besseren Übersicht ist in Figur 7 nur ein dem Hebel zugewandter Endabschnitt der Buchse 120 sowie der daran anliegende Hebel 150 in seiner Schließstellung ausschnittsweise gezeigt. An dem dem Hebel zugewandten Ende der Buchse 120 ist ein radial vorstehender Flansch 123 ausgebildet. Im Flansch 123 ist eine diametral durch die Längsachse der Buchse verlaufende, zur Abflachung 122 parallele erste V-Nut 125 eingebracht. Eine ebenfalls im Flansch 123 diametral verlaufende zweite V-Nut 127 steht im Wesentlichen rechtwinklig zur ersten V-Nut 125.

Am Hebel 150 ragt an der ersten Exzenterabflachung 159 ein Vorsprung 151 parallel zu der den Stift 154 aufnehmenden Durchbohrung 152 hervor. Der Vorsprung 151 hat ein zum formschlüssigen Eingriff in die erste V-Nut 125 oder die zweite V-Nut 127 komplementäres Querschnittsprofil. So kann in der Offenstellung durch Drehung des Hebels 150 der Vorsprung 151 wahlweise in die erste V-Nut 125 oder in die zweite V-Nut 127 unter Wirkung der Federkraft der Schraubenfeder 129 einrasten.

Durch dieses Einrasten werden Hebel 150 und Buchse 120 drehfest gekoppelt. Dabei entspricht ein Einrasten in der ersten V-Nut 125 der Verriegelungsstellung des Bolzens 110 und ein Einrasten in der zweiten V-Nut 127 der Entriegelungsstellung des Bolzens 110. Die beiden Rastungen legen demnach in der Offenstellung des Hebels 150 die Ver- und Entriegelungsstellung des Bolzens 110 fest und erleichtern so eine Montage der Befestigungsvorrichtung, denn durch das Einrasten in der zweiten V-Nut 127 wird die Entriegelungsstellung des Bolzens 110 bereits während des Einsetzens des Bolzens 110 in die Halteausnehmung 302 fixiert. Ferner wird durch das Einrasten in die erste V-Nut 125 dem Benutzer die Verriegelungsstellung bereits vor dem Schließen des Hebels 150 angezeigt.

Die Befestigungsvorrichtung 100 kann zur Befestigung des Modulelements in jeder räumlichen Orientierung dienen. Beispielsweise kann die Halteausnehmung 302 der Haltestruktur 300 vertikal verlaufen (Gravitationskraft in Z-Richtung des gezeigten Koordinatensystems). Ferner kann die Befestigungsvorrichtung 100 das Modulelement an einem Boden oder an einer Decke des Flugzeugs befestigt werden (Gravitationskraft in Y-Richtung des gezeigten Koordinatensystems).

Die Außenwand 200 des Modulements kann durch eine einzelne Befestigungsvorrichtung 100 mit einer Haltestruktur 300 des Flugzeugs verbunden werden. Zur besseren Lastenverteilung oder weiteren Verdrehsicherung der Außenwand 200 können mehrere baugleiche Befestigungsvorrichtungen 100 nebeneinander und/oder untereinander an der Außenwand 200 angeordnet sein. Zur Vereinfachung und Beschleunigung der Montage eines Modulelements mit Außenwand 200 werden vorzugsweise vier Anbindungspunkte vorgesehen (nicht gezeigt). Zwei im oberen Bereich der Außenwand 200 angeordnete Befestigungsvorrichtungen 100 ermöglichen ein aktives Verspannen durch die Bewegung des Hebels 150 in die Schließstellung. Zwei weitere passive Anbindungspunkte im unteren Bereich besitzen keinen Hebel 150 und weisen anstelle des längsbeweglichen und einstellbaren Bolzens 110 einen mit der Außenwand 200 starr verbundenen Bolzen auf. Die passiven Anbindungen greifen bei der Montage zeitgleich mit den aktiven Anbindungspunkten in entsprechend positionierte Halteausnehmungen 302 an der Haltestruktur 300 ein. Die aktiven Anbindungspunkte sichern dabei die Positionierung der starren Bolzen in den entsprechenden Halteausnehmungen 302.

Mit der Befestigungsvorrichtung 100 ist eine einfache, schnelle und zuverlässige Befestigung eines Modulelements an einer Haltestruktur 300 in einem Flugzeug ermöglicht. Die Befestigungsvorrichtung 100 schafft neben der mechanischen Anbindung der Außenwand 200 des Modulelements an der Haltestruktur 300 zugleich eine zuverlässige elektrische Verbindung zum Potentialausgleich des Modulelements bezüglich der Masse des Flugzeugs. Zudem kann durch eine Wahl der Materialien für die Vorsprünge 128 bzw. die Blattfeder 130 eine definierte Dämpfung in axialer Richtung realisiert werden.

Die Befestigungsvorrichtung ist durch das Zusammenspiel der formschlüssigen Verriegelungsstellung des Bolzens 110 und der drehgesicherten Schließstellung des Hebels 150 zuverlässig, einfach zu bedienen und gegen Fehlbedienungen abgesichert. Somit können Modulelemente, insbesondere elektrische Geräte in einem Flugzeug, ohne Weiteres ausgetauscht oder aktualisiert werden.

## Patentansprüche

1. Befestigungsvorrichtung (100) für die Anbringung eines Modulelements an einer Haltestruktur (300) in einem Flugzeug, wobei die Befestigungsvorrichtung (100) aufweist:
- einen Bolzen (110), der an einem ersten Ende einen verbreiterten Kopf (112) zum Eingriff in eine Halteausnehmung (302) der Haltestruktur (300) aufweist, und der an einem entgegengesetzten zweiten Ende mit einem zur Drehung mit dem Bolzen (110) verbundenen, in eine Offenstellung und eine Schließstellung bewegbaren Hebel (150) versehen ist,
- eine auf dem Bolzen (110) längsbeweglich angebrachten Buchse (120), die zum Halten einer Außenwand (200) des Modulelements ausgebildet ist, und
- einen von dem Hebel (150) betätigbaren Exzenter (158), der bei einer Bewegung des Hebels (150) in seine Schließstellung die Buchse (120) längs des Bolzens (110) auf den Kopf (112) zu bewegt,
**dadurch gekennzeichnet, dass**
der Bolzen (110) einen sich an den Kopf (112) anschließenden Abschnitt (114) mit einer ersten Querabmessung (L₁) und einer zumindest im Wesentlichen rechtwinklig zur ersten Querabmessung (L₁) angeordneten zweiten Querabmessung (L₂) aufweist, die größer als die erste Querabmessung (L₁) ist, und dass
die Buchse (120) eine elektrisch leitende Blattfeder (130) zum in Kontakt kommen mit einerseits der Außenseite der Außenwand (200) und andererseits der Haltestruktur (300) trägt, wobei die Blattfeder (130) außerhalb der Buchse (120) einen flächigen Kontakt oder zumindest einen Auflagepunkt (138) zum Kontaktieren der Haltestruktur (300) aufweist.

2. Befestigungsvorrichtung nach Anspruch 1,
bei der die Buchse (120) elektrisch leitend ist.

3. Befestigungsvorrichtung für die Anbringung eines Modulelements an einer Haltestruktur (300) in einem Flugzeug, wobei die Befestigungsvorrichtung (100) aufweist:
- einen Bolzen (110), der an einem ersten Ende einen verbreiterten Kopf (112) zum Eingriff in eine Halteausnehmung (302) der Haltestruktur (300) aufweist, und der an einem entgegengesetzten zweiten Ende mit einem zur Drehung mit dem Bolzen (110) verbundenen, in eine Offenstellung und eine Schließstellung bewegbaren Hebel (150) versehen ist,
- eine auf dem Bolzen (110) längsbeweglich angebrachten Buchse (120), die zum Halten einer Außenwand (200) des Modulelements ausgebildet ist, und
- einen von dem Hebel (150) betätigbaren Exzenter (158), der bei einer Bewegung des Hebels (150) in seine Schließstellung die Buchse (120) längs des Bolzens (110) auf den Kopf (112) zu bewegt,
**dadurch gekennzeichnet, dass**
der Bolzen (110) einen sich an den Kopf (112) anschließenden Abschnitt (114) mit einer ersten Querabmessung (L₁) und einer zumindest im Wesentlichen rechtwinklig zur ersten Querabmessung (L₁) angeordneten zweiten Querabmessung (L₂) aufweist, die größer als die erste Querabmessung (L₁) ist, und dass
die Buchse (120) elektrisch leitend und zum in Kontakt kommen mit der Haltestruktur (300) ausgebildet ist.

4. Befestigungsvorrichtung nach einem der Ansprüche 1 bis 3,
bei der in einer ersten Drehstellung des Bolzens (110) die Buchse (120) die Bewegung des Hebels (150) in seine Schließstellung blockiert.

5. Befestigungsvorrichtung nach einem der Ansprüche 1 bis 4,
**dadurch gekennzeichnet, dass** der Exzenter (158) einstückig mit dem Hebel (150) ausgebildet ist.

6. Befestigungsvorrichtung nach einem der Ansprüche 1 bis 5,
bei der die Buchse (120) auf ihrem Außenumfang eine Sicherungsabflachung (122) zum Zusammenwirken mit einem Sicherungsvorsprung (156) des Hebels (150) aufweist, um den Hebel (150) in seiner Schließstellung drehfest mit der Buchse (120) zu koppeln.

7. Befestigungsvorrichtung nach einem der Ansprüche 1 bis 5,
bei der die Buchse (120) zur formschlüssigen Aufnahme der Außenwand (200) des Modulelements und/oder der Blattfeder (130) ausgebildet ist.

8. Befestigungsvorrichtung nach Anspruch 6 und 7,
bei der die Sicherungsabflachung (122) den Formschluss zwischen der Buchse (120) und der Außenwand (200) des Modulelements und/oder der Blattfeder (130) herstellt.

9. Befestigungsvorrichtung nach Anspruch 1 bis 8,
bei der an einem dem Hebel (150) zugewandten, stirnseitigen Ende der Buchse (120) wenigstens eine erste radiale Nut (123) vorhanden ist, die ausgebildet ist zum Eingriff eines Vorsprungs (151), der vom Exzenter (158) an einer der Offenstellung entsprechenden Position hervorsteht
und/oder bei der der Kopf (112) als Kegel oder Kegelstumpf ausgebildet ist.

10. Befestigungsvorrichtung nach einem der Ansprüche 1 bis 9,
bei der eine zwischen der Buchse (120) und dem Kopf (112) des Bolzens (110) wirkende Druckfeder (129) den Bolzen (110) in eine Montage-/Demontagestellung vorspannt.

11. Befestigungsvorrichtung nach Anspruch 10,
bei der die Druckfeder (129) sich am Abschnitt (114) des Bolzens (110) abstützt.

12. Befestigungsvorrichtung nach einem der Ansprüche 1 bis 11,
bei der die Buchse (120) eine elektrisch leitende Beschichtung aufweist.

13. Befestigungssystem, umfassend wenigstens eine Befestigungsvorrichtung nach einem der Ansprüche 1 bis 12 und eine Außenwand (200) eines Modulelements, bei der die Außenwand (200) und/oder die Blattfeder (130) eine die Buchse (120) drehfest aufnehmende Durchgangsausnehmung (132, 202) aufweisen und auf der Buchse (120) zwischen einer Klemmscheibe (140) und einem Flansch (126) der Buchse (120) verspannt sind.

14. Befestigungssystem, umfassend wenigstens eine Befestigungsvorrichtung nach einem der Ansprüche 1 bis 12 und eine Haltestruktur (300), wobei die Haltestruktur (300) wenigstens eine Halteausnehmung (302) aufweist mit
- einem ersten Bereich (304), der zum Durchtritt des Kopfes (112) der Befestigungsvorrichtung (100) bemessen ist,
- einem zweiten Bereich (308) mit einem der zweiten Querabmessung (L₂) des Abschnitts (114) des Bolzens (110) entsprechenden Durchmesser, und
- einem den ersten Bereich (304) mit dem zweiten Bereich (308) verbindenden Führungsabschnitt (306), dessen Querabmessung der ersten Querabmessung (L₁) des Abschnitts (114) des Bolzens (110) entspricht.

15. Befestigungssystem nach Anspruch 14,
**dadurch gekennzeichnet, dass** der erste Bereich (304) der Halteausnehmung (302) oberhalb des zweiten Bereichs (308) angeordnet ist.

## Claims

1. A fastening device (100) for attaching a module element to a support structure (300) in an aircraft, wherein the fastening device (100) comprises:
- a stud (110), which has a broadened head (112) at a first end for engaging in a support recess (302) of the support structure (300), and which is provided at an opposite second end with a lever (150) which is connected to the stud (110) for rotation and is configured to be moved into an open position and a closed position,
- a bushing (120), which is provided on the stud (110) so as to be longitudinally movable and is designed to support an outer wall (200) of the module element, and
- an eccentric (158) which can be actuated by the lever (150) and moves the bushing (120), during a movement of the lever (150) into the closed position thereof, along the stud (110) towards the head (112),
**characterized in that**
the stud (110) has a section (114) which adjoins the head (112) and has a first lateral dimension (L₁) and a second lateral dimension (L₂), which is disposed at least substantially perpendicularly to the first lateral dimension (L₁) and is larger than the first lateral dimension (L₁), and **in that**
the bushing (120) supports an electrically conductive leaf spring (130) for contacting the outside of the outer wall (200) on the one hand and the support structure (300) on the other hand, wherein outside of the bushing (120) the leaf spring (130) has a planar contact or at least one bearing point (138) for contacting the support structure (300).

2. The fastening device according to Claim 1,
wherein the bushing (120) is electrically conductive.

3. A fastening device for attaching a module element to a support structure (300) in an aircraft, wherein the fastening device (100) comprises:
- a stud (110), which has a broadened head (112) at a first end for engaging in a support recess (302) of the support structure (300), and which is provided at an opposite second end with a lever (150) which is connected to the stud (110) for rotation and is configured to be moved into an open position and a closed position,
- a bushing (120), which is provided on the stud (110) so as to be longitudinally movable and is designed to support an outer wall (200) of the module element, and
- an eccentric (158) which can be actuated by the lever (150) and moves the bushing (120), during a movement of the lever (150) into the closed position thereof, along the stud (110) towards the head (112),
**characterized in that**
the stud (110) has a section (114) which adjoins the head (112) and has a first lateral dimension (L₁) and a second lateral dimension (L₂), which is disposed at least substantially perpendicularly to the first lateral dimension (L₁) and is larger than the first lateral dimension (L₁), and **in that**
the bushing (120) is designed to be electrically conductive and to contact the support structure (300).

4. The fastening device according to one of Claims 1 to 3,
wherein the bushing (120) blocks the movement of the lever (150) into the closed position thereof in a first rotational position of the stud (110).

5. The fastening device according to one of Claims 1 to 4,
**characterized in that** the eccentric (158) is constructed in one piece with the lever (150).

6. The fastening device according to one of Claims 1 to 5,
wherein the bushing (120) has on its outer circumference a flattened locking portion (122) for cooperating with a locking projection (156) of the lever (150) in order to couple the lever (150) to the bushing (120) in rotationally fixed manner in the closed position of the lever.

7. The fastening device according to one of Claims 1 to 5,
wherein the bushing (120) is designed to receive the outer wall (200) of the module element and/or the leaf spring (130) in form-fitting manner.

8. The fastening device according to Claim 6 and 7,
wherein the flattened locking portion (122) produces the form-fit between the bushing (120) and the outer wall (200) of the module element and/or the leaf spring (130).

9. The fastening device according to Claim 1 to 8,
wherein at least one first radial groove (123) is provided on an end face, facing the lever (150), of the bushing (120) and is designed for the engagement of a projection (151) which protrudes from the eccentric (158) at a position corresponding to the open position,
and/or wherein the head (112) is designed as a cone or a truncated cone.

10. The fastening device according to one of Claims 1 to 9,
wherein a compression spring (129) acting between the bushing (120) and the head (112) of the stud (110) pretensions the stud (110) in an assembly/disassembly position.

11. The fastening device according to Claim 10,
wherein the compression spring (129) is supported on the section (114) of the stud (110).

12. The fastening device according to one of Claims 1 to 11,
wherein the bushing (120) has an electrically conductive coating.

13. A fastening system, comprising at least one fastening device according to one of Claims 1 to 12 and an outer wall (200) of a module element, wherein the outer wall (200) of the module element and/or the leaf spring (130) have a through recess (132, 202) which receives the bushing (120) in rotationally fixed manner and are braced on the bushing (120) between a clamping disc (140) and a flange (126) of the bushing (120).

14. A fastening system, comprising at least one fastening device according to one of Claims 1 to 12 and a support structure (300), wherein the support structure (300) has at least one support recess (302) comprising
- a first region (304) which is dimensioned for a head (112) of a fastening device (100) to pass through,
- a second region (308) with a diameter corresponding to the second lateral dimension (L₂) of the section (114) of the stud (110), and
- a guide section (306) which connects the first region (304) to the second region (308) and whereof the lateral dimension corresponds to the first lateral dimension (L₁) of the section (114) of the stud (110).

15. The fastening system according to Claim 14,
**characterized in that** the first region (304) of the support recess (302) is disposed above the second region (308).

## Revendications

1. Dispositif de fixation (100) pour le montage d'un élément de module sur une structure de retenue (300) dans un aéronef, ledit dispositif de fixation (100) comportant :
- un boulon (110) qui présente, à une première extrémité, une tête élargie (112) destinée à s'engager dans un évidement de retenue (302) de la structure de retenue (300) et qui est pourvu, à une deuxième extrémité opposée, d'un levier (150) relié à rotation au boulon (110) et pouvant être déplacé dans une position d'ouverture et une position de fermeture,
- une douille (120) montée de manière à pouvoir se déplacer longitudinalement sur le boulon (110), qui est agencée pour maintenir une paroi extérieure (200) de l'élément de module, et
- un excentrique (158) qui peut être actionné par le levier (150) et qui, lors d'un déplacement du levier (150) dans sa position de fermeture, déplace la douille (120) le long du boulon (110) en direction de la tête (112),
**caractérisé en ce que**
le boulon (100) comporte un tronçon (114) se raccordant à la tête (112) et ayant une première dimension transversale (L₁) et une deuxième dimension transversale (L₂) au moins sensiblement perpendiculaire à la première dimension transversale (L₁), qui est supérieure à la première dimension transversale (L₁), et **en ce que**
la douille (120) porte un ressort à lame (130) électriquement conducteur destiné à venir en contact d'une part avec la face externe de la paroi extérieure (200) et d'autre part avec la structure de retenue (300), le ressort à lame (130) présentant à l'extérieur de la douille (120) un contact plat ou au moins un point d'appui (138) pour la mise en contact avec la structure de retenue (300).

2. Dispositif de fixation selon la revendication 1,
dans lequel la douille (120) est électriquement conductrice.

3. Dispositif de fixation pour le montage d'un élément de module sur une structure de retenue (300) dans un aéronef, ledit dispositif de fixation (100) comportant :
- un boulon (110) qui présente, à une première extrémité, une tête élargie (112) destinée à s'engager dans un évidement de retenue (302) de la structure de retenue (300) et qui est pourvu, à une deuxième extrémité opposée, d'un levier (150) relié à rotation au boulon (110) et pouvant être déplacé dans une position d'ouverture et une position de fermeture,
- une douille (120) montée de manière à pouvoir se déplacer longitudinalement sur le boulon (110), qui est agencée pour maintenir une paroi extérieure (200) de l'élément de module, et
- un excentrique (158) qui peut être actionné par le levier (150) et qui, lors d'un déplacement du levier (150) dans sa position de fermeture, déplace la douille (120) le long du boulon (110) en direction de la tête (112),
**caractérisé en ce que**
le boulon (100) comporte un tronçon (114) se raccordant à la tête (112) et ayant une première dimension transversale (L₁) et une deuxième dimension transversale (L₂) au moins sensiblement perpendiculaire à la première dimension transversale (L₁), qui est supérieure à la première dimension transversale (L₁), et **en ce que**
la douille (120) est électriquement conductrice et agencée pour venir en contact avec la structure de retenue (300).

4. Dispositif de fixation selon l'une des revendications 1 à 3,
dans lequel, dans une première position de rotation du boulon (110), la douille (120) bloque le déplacement du levier (150) dans sa position de fermeture.

5. Dispositif de fixation selon l'une des revendications 1 à 4,
**caractérisé en ce que** l'excentrique (158) est réalisé d'une seule pièce avec le levier (150).

6. Dispositif de fixation selon l'une des revendications 1 à 5,
dans lequel la douille (120) comporte sur sa circonférence extérieure un méplat d'arrêt (122) destiné à coopérer avec une saillie d'arrêt (156) du levier (150) pour coupler le levier (150) de manière solidaire en rotation avec la douille (120) dans sa position de fermeture.

7. Dispositif de fixation selon l'une des revendications 1 à 5,
dans lequel la douille (120) est agencée pour recevoir par complémentarité de forme la paroi extérieure (200) de l'élément de module et/ou le ressort à lame (130).

8. Dispositif de fixation selon les revendications 6 et 7,
dans lequel le méplat d'arrêt (122) réalise la complémentarité de forme entre la douille (120) et la paroi extérieure (200) de l'élément de module et/ou du ressort à lame (130).

9. Dispositif de fixation selon les revendications 1 à 8,
dans lequel l'extrémité frontale de la douille (120) en regard du levier (150) comporte au moins une première rainure radiale (123) qui est conçue pour l'engagement d'un tenon (151) qui fait saillie de l'excentrique (158) à une position qui correspond à la position d'ouverture
et/ou dans lequel la tête (112) est réalisée sous la forme d'un cône ou d'un tronc de cône.

10. Dispositif de fixation selon l'une des revendications 1 à 9,
dans lequel un ressort de compression (129) agissant entre la douille (120) et la tête (112) du boulon (110) précontraint le boulon (110) dans une position de montage/démontage.

11. Dispositif de fixation selon la revendication 10,
dans lequel le ressort de compression (129) prend appui sur le tronçon (114) du boulon (110).

12. Dispositif de fixation selon l'une des revendications 1 à 11,
dans lequel la douille (120) présente un revêtement électriquement conducteur.

13. Système de fixation, comprenant au moins un dispositif de fixation selon l'une des revendications 1 à 12 et une paroi extérieure (200) d'un élément de module, dans lequel la paroi extérieure (200) et/ou le ressort à lame (130) présentent un évidement de passage (132, 202) recevant la douille (120) de manière solidaire en rotation et sont serrés sur la douille (120) entre une rondelle de serrage (140) et une collerette (126) de la douille (120).

14. Système de fixation, comprenant au moins un dispositif de fixation selon l'une des revendications 1 à 12 et une structure de retenue (300), la structure de retenue (300) présentant au moins un évidement de retenue (302) comportant :
- une première zone (304) qui est dimensionnée pour le passage de la tête (112) du dispositif de fixation (100),
- une deuxième zone (308) d'un diamètre correspondant à la deuxième dimension transversale (L₂) du tronçon (114) du boulon (110), et
- une partie de guidage (306) reliant la première zone (304) à la deuxième zone (308), dont la dimension transversale correspond à la première dimension transversale (L₁) du tronçon (114) du boulon (110).

15. Système de fixation selon la revendication 14,
**caractérisé en ce que** la première zone (304) de l'évidement de retenue (302) est disposée au-dessus de la deuxième zone (308).
